# EUROPÄISCHE PATENTSCHRIFT

(11) **EP 3 053 448 B1**
(45) Veröffentlichungstag und Bekanntmachung des Hinweises auf die Patenterteilung: **18.07.2018**
(21) Anmeldenummer: 15152761.1
(22) Anmeldetag: 27.01.2015
(51) Int. Cl.: A23C 19/076, A23C 19/09, B65B 39/00, A23P 30/20, A23L 5/00

(54) **LEBENSMITTELZUBEREITUNG DIE QUARK ENTHÄLT**
FOOD COMPOSITION COMPRISING CURD CHEESE
COMPOSITION ALIMENTAIRE COMPRENANT DU FROMAGE BLANC

(43) Veröffentlichungstag der Anmeldung: 10.08.2016
(73) Patentinhaber: DMK Deutsches Milchkontor GmbH, 27404 Zeven (DE)
(72) Erfinder: Schomacker, Marina, 27419 Sittensen (DE); Hahn, Michael, 27404 Heerlingen (DE)
(74) Vertreter: Fabry, Bernd

(56) Entgegenhaltungen:
- EP-A1- 2 025 246
- EP-B1- 1 348 340
- DE-A1- 19 962 780
- DE-U1- 20 107 374
- DE-U1- 20 200 862
- US-A1- 2006 292 265
- DATABASE GNPD [Online] MINTEL; April 2009 (2009-04), Anonymous: "Cream Cheese Spread", XP002743573, Database accession no. 1078844
- DATABASE GNPD [Online] MINTEL; Dezember 2010 (2010-12), Anonymous: "Paprika Fresh Cheese and Plain Fresh Cheese", XP002743574, Database accession no. 1451123
- DATABASE GNPD [Online] MINTEL; November 1996 (1996-11), Anonymous: "Elegante", XP002743575, Database accession no. 10001578
- DATABASE GNPD [Online] MINTEL; Oktober 1996 (1996-10), Anonymous: "Layered Cottage Cheese", XP002743576, Database accession no. 45495
- H.G. Kessler: "Lebensmittel-und Bioverfahrenstechnik, Molkereitechnologie", 1 January 1996 (1996-01-01), Verlag A.Kessler, München * Seiten: 444,445, 519 *

## Beschreibung

### GEBIET DER ERFINDUNG

Die Erfindung befindet sich auf dem Gebiet der Milchprodukte und betrifft eine streichfähige Lebensmittelzubereitung auf Basis von zum einen Quark gemäss dem Anspruch 1 und zum anderen Gemüse und/oder Kräutern.

### STAND DER TECHNIK

Frischkäse und Gemüse- oder Kräuterzubereitungen, beispielsweise Speisequark und eine Schnittlauchzubereitung, gehören speziell in den Ländern der Europäischen Union zu den beliebtesten Brotaufstrichen. Besonders gerne werden die Produkte zusammen verwendet, wobei in der Regel zunächst der Frischkäse aufgestrichen und darauf dann die Gemüse- oder Kräuterzubereitung gegeben wird. Dazu bedarf es bislang entweder zwei verschiedener Produkte, die einzeln aufgestrichen werden, wobei für jede der Produkte dann auch wieder eine Dosierhilfe, also ein Messer oder ein Löffel benötigt werden, damit die einzelnen Produkte nicht verunreinigt werden, oder aber es wird ein Produkt angeboten, nämlich ein Speisequark mit eine Gemüse/Kräuteauflage.

Im heutigen Zeitalter der so genannten "Convenience Produkte" gehört es zu den typischen Verbraucherbedürfnissen, auch im Nahrungsmittelsektor alles einfacher zu gestalten. Wozu zwei Produkte einkaufen, wenn man sie doch zusammen verwenden will? Im vorliegenden Fall hat es hierzu bislang zwei Ansätze gegeben, nämlich zum einen ein Produkt, bei dem die beiden Komponenten räumlich getrennt vorliegen und zum anderen ein Mischprodukt aus Frischkäse und Gemüse/Kräuterzubereitung. Die "2-in-1" Produkte haben sich bis heute im Markt nicht durchgesetzt, weil es doch letztlich kein Fortschritt darstellt, wenn beide Komponenten nacheinander auf das Brot aufgetragen werden müssen. Das Mischprodukt erfüllt weder die ästhetischen noch geschmacklichen Anforderungen des Marktes. Die Produkte, bei denen dem Speisequark eine Gemüse/Kräuterauflage zugegeben wird, sind zwar im Markt etabliert, doch ist die Menge an Gemüse oder Kräutern limitiert, weil sie in größeren Mengen verwendet sehr leicht ausfärben und dem Quark dann eine unerwünschte grünliche Färbung verleihen, die vom Verbraucher instinktiv mit "verdorben" assoziiert wird.

Aus der EP 1348340 B1 (NESTLE) ist eine Milchproduktzubereitung bekannt, die eine Fruchtbasis als zweite Komponente enthalten kann. Die Produkte werden durch Co-Extrusion hergestellt, wobei die Komponenten dann jeweils in einzelnen Sektoren angeordnet sind, die nicht miteinander in Kontakt stehen. Auf diese Weise kann dann nur wieder entweder die eine oder die andere Komponente aufgestrichen werden.

Das Dokument US 2006/0292265 A1 betrifft ein aus fermentierter Milch zusammengesetztes Produkt in einer Verpackung in Form eines Bechers, das zwei aneinander angrenzende Massen an fermentiertem Milchprodukt von kontrastierenden Farben aufweist, die nebeneinander angeordnet sind. Eine der oben genannten Massen kann auch Kräuter enthalten

Die Aufgabe der vorliegenden Erfindung hat daher darin bestanden, eine streichfähige Zubereitung, die sowohl Quark als auch eine Gemüse- und/oder Kräuterzubereitung enthält, zur Verfügung zu stellen, bei denen die beiden Komponenten gemeinsam aus einem Container bzw. Behältnis entnommen und als Brotaufstrich eingesetzt werden können, wobei keine Durchmischung im Behälter stattfindet, so dass beide Komponenten auch als separate Bestandteile wahrgenommen werden.

Eine weitere Aufgabe hat darin bestanden, die Komponenten vorzugsweise so auszuwählen, dass sie sich gegenseitig hinsichtlich ihrer sensorischen Eigenschaften nicht beeinträchtigen. Dazu gehört insbesondere eine Veränderung der Konsistenz der Quarkkomponente durch Reaktion mit Stoffen, die aus den Gemüse- oder Kräuterzubereitungen austreten können.

Eine dritte Aufgabe hat darin bestanden, die Komponenten so vorzulegen, dass im Vergleich zum Stand der Technik und bezogen auf die Menge an Speisequark eine größere Menge an Gemüse- und/oder Kräuterzubereitung hinzugefügt werden kann, ohne dass es dadurch zu einer Verfärbung der Quarkmasse kommt.

### BESCHREIBUNG DER ERFINDUNG

Gegenstand der Erfindung ist eine Lebensmittelzubereitung, enthaltend
(a) einen Quark, dem keine Sahne zugesetzt worden ist, der dadurch erhältlich ist, dass man
   (a1) Rohmilch einer Temperaturbehandlung unterwirft und den Rahm abtrennt, so dass eine ungesäuerte Quarkgrundmasse entsteht,
   (a2) die so erhaltene Mischung einer Temperaturbehandlung unterwirft, bis Denaturierung eintritt,
   (a3) das denaturierte Produkt mit Starterkulturen und Lab versetzt und gegebenenfalls
   (a4) die nach Abschluss der Fermentation erhaltene Quarkgrundmasse auf einen definierten Trockenmassen- und Proteingehalt einstellt,
   und als Starterkultur
   (i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
   (ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
      einsetzt,
      wobei der Quark eine Viskosität nach Brookfield (RVT, Spindel 1, 10 Upm) bei 20 °C im Bereich von 1.000 bis 8.000 mPas aufweist,
   und
(b) eine Gemüse- und/oder Kräuterzubereitung,
   wobei die Komponenten (a) und (b) im Gewichtsverhältnis von 80:20 bis 50:50 vorliegen, und in einem Container dergestalt nebeneinander vorliegen, dass sie in den drei Raumrichtungen zusammenhängende Volumina einnehmen, die sich nicht vermischen.

Überraschenderweise wurde gefunden dass die erfindungsgemäße Aufgabe voll umfänglich gelöst wird, wenn man dafür sorgt, dass die beiden Komponenten in solcher Weise in die Container bzw. Behältnisse abgefüllt werden, dass sie zusammenhängende Volumina bilden, d.h. als separate Komponenten nebeneinander vorliegen.

Die Komponenten (a) und (b) können dadurch in den drei Raumrichtungen jeweils zusammenhängende Volumina bilden, indem sie im Container
- geschichtet vorliegen;
- ein Strudelmuster bilden, oder
- als jeweils separate Stränge vorliegen.
Als besonders vorteilhaft hat es sich erweisen, wenn die Komponenten entweder ein Strudelmuster bilden oder als separate Stränge vorliegen. Unter einem Strudelmuster ist zu verstehen, dass die Komponenten ein spiralförmiges Muster aufspannen, das sich in der Ebene und in der Tiefe des Behälters fortsetzt, ohne unterbrochen zu werden. Das Strangmuster entspricht dem, welches man von anderen Lebensmitteln kennt, die in Tuben abgepackt werden und die ebenfalls zwei Komponenten mit unterschiedlichen Farben oder Geschmacksrichtungen enthalten.

### CONTAINER

Unter einem Container ist im Sinne der Erfindung jedes Behältnis zu verstehen, das von seiner Form und seinem Material geeignet ist, Lebensmittel, speziell cremige Produkte, wie sie die erfindungsgemäßen Zubereitungen darstellen, aufzunehmen, um sie an den Endverbraucher abgeben zu können. In der Regel stellen die Container - obschon dies für die Erfindung nicht kritisch ist - Schalen oder Töpfe mit einem Fassungsvermögen zwischen 50 und 500 ml, vorzugsweise zwischen 100 und 250 ml dar, die nach der Befüllung mit einer Folie vs. Platine sowie gegebenenfalls einen Deckel verschlossen werden und dann in Trays vs. Paletten abgepackt an den Handel abgegeben werden. Die Behältnisse können blickdicht sein, vorzugsweise sind sie jedoch transparent, damit der Verbraucher das attraktive Muster - sei es die Schichtung, den Strudel oder die Stränge - erkennen kann.

### QUARK

Die erfindungsgemäßen Zubereitungen als Komponente (a) Speisequark. Zur Herstellung von Quark wird in der Regel entrahmte Milch einer Temperaturbehandlung unterworfen und die enthaltenen Proteine denaturiert. Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch wurde die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Im Sinne der vorliegenden Erfindung wird als Komponente (a) eine spezielle Quarkgrundmasse (d.h. ein Quark, dem noch keine Sahne zugesetzt worden ist) eingesetzt., die dadurch erhältlich ist, dass man
(a) Rohmilch einer Temperaturbehandlung unterwirft und den Rahm abtrennt, so dass eine ungesäuerte Quarkgrundmasse entsteht,
(b) die so erhaltene Mischung einer Temperaturbehandlung unterwirft, bis Denaturierung eintritt,
(c) das denaturierte Produkt mit Starterkulturen und Lab versetzt und gegebenenfalls
(d) die nach Abschluss der Fermentation erhaltene Quarkgrundmasse auf einen definierten Trockenmassen- und Proteingehalt einstellt,
und als Starterkultur
(i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
einsetzt.

Solche Quarkgrundmassen weisen bei 20 °C eine Viskosität nach Brookfield (RVT, Spindel 1, 10 Upm) im Bereich von 1.000 bis 8.000 mPas, vorzugsweise 2.000 bis 6.00 mPas und insbesondere 3.000 bis 5.000 mPas auf.

Der Vorteil, der mit der Verwendung solcher Quarkgrundmassen verbunden ist, liegt darin, dass unter Verwendung der ausgewählten Starterkulturen ein geschmacklich signifikant verbesserter Quark erhalten wird, der cremig schmeckt und keinen schleimigen Gesamteindruck hinterlässt. Die Masse besitzt zudem eine Konsistenz, die Molkenaustritt nach dem Entnehmen aus dem Container/Behältnis zwar nicht völlig verhindert, jedoch erheblich verzögert. Durch diese Erfindung behält das Finalprodukt seine appetitliche Optik auch nach wiederholter Produktentnahme bei.

Diese vorteilhafte Konsistenz lässt sich noch weiter verbessern, wenn man die Quarkmassen einer Nachbehandlung unterwirft, indem man eine definierte Menge an Scherenergie über mindestens einen Rotor-Stator Mischer einträgt; dieses Verfahren wird auch als "stretching" bezeichnet. Dabei kommen je nach Bedarf ein- bis dreistufige Systeme zum Einsatz. Durch Variation von Schlitzbreite, Anzahl und Geometrie der Zahnreihen, Anzahl der Rotor-Stator-Sätze, Verweilzeit und Drehzahl kann die jeweils gewünschte Viskosität und Cremigkeit eingestellt werden, wobei die Justierung dieser Parameter vom Fachmann auf der Grundlage seines allgemeinen Wissens vorgenommen werden kann, ohne dazu erfinderisch tätig werden zu müssen. Entsprechende Bauteile sind beispielsweise unter der Bezeichnung "Ytron-Z" (Ytron-Mischer) von der Ytron Process Technology GmbH im Handel erhältlich.

Die nach der Fermentation und gegebenenfalls nach dem Stretching Quarkgrundmasse wird anschließend beispielsweise durch Zugabe von Sahne auf den gewünschten Gehalt an Trockenmasse, Proteinen und Fett eingestellt. Vorzugsweise liegt der Trockenmassengehalt der Frischkäsegrundmasse bei 15 bis 24 Gew.-% und insbesondere bei 18 Gew.-%. Der Proteingehalt kann 10 bis 15 Gew.-% und vorzugsweise 12 Gew.-% betragen.

### GEMÜSE- UND KRÄUTERZUBEREITUNG

Die Natur der Gemüse- bzw. Kräuterzubereitung ist im Sinne der Erfindung wenig kritisch und wird im Wesentlichen durch die geschmacklichen Vorgaben bestimmt.

In Betracht kommen vor allem solche Gemüse, die eine herzhafte Note und/oder frische Farbe aufweisen, wie beispielsweise Gurken, Radieschen, Zwiebeln, Knoblauch, Rettich, (getrocknete) Tomaten und dergleichen.

Unter den Kräutern sind Petersilie, Rosmarin, Thymian, Salbei, Kerbel und Dill bevorzugt.

Die Komponenten können frisch in pürierter Form, d.h. mit einem Wasseranteil von bis zu 20 Gew.-% eingesetzt werden oder gleich als Würzpaste, in der auch weitere Zusatzstoffe, wie Gewürze und Aromen enthalten sein können. Zu den wichtigsten Gewürzen gehören Pfeffer, Salz, Curry, Paprika und dergleichen. Deren Anteil kann bezogen auf die Würzpaste bis 2 Gew.-% betragen.

### ZUBEREITUNGEN

Die erfindungsgemäßen Zubereitungen enthalten die Komponenten (a) und (b) im Gewichtsverhältnis von 80:20 bis 50:50 und vorzugsweise von 70:30 bis 60:40 enthalten.

Neben den beiden Komponenten (a) und (b) können die Zubereitungen auch weitere für Milchprodukte übliche Hilfs- und Zusatzstoffe enthalten, wozu insbesondere Verdickungs- und Säuerungsmittel sowie Säureregulatoren zählen.

In einer bevorzugten Ausführungsform können die erfindungsgemäßen Zubereitungen die Komponenten daher in folgenden Mengen enthalten:
(a) 20 bis 80 Gew.-%, vorzugsweise 50 bis 60 Gew.-% Quark, dem noch keine Sahne zugesetzt worden ist,
(b) 20 bis 50 Gew.-%, vorzugsweise 30 bis 40 Gew.-% Gemüse- oder Kräuterzubereitung,
(c) 0 bis 5 Gew.-%, vorzugsweise 1 bis 3 Gew.-% Verdickungsmittel,
(d) 0 bis 2 Gew.-%, vorzugsweise 0,5 bis 2 Gew.-% Säuerungsmittel und Säureregulatoren, sowie
(e) 0 bis 3 Gew.-%, vorzugsweise 1 bis 2 Gew.-% weitere Hilfs- und Zusatzstoffe mit der Maßgabe, dass sich die Mengenangaben zu 100 Gew.-% ergänzen.

### VERDICKUNGSMITTEL

Verdickungsmittel, die die fakultative Komponente (c) bilden, sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400: - Alginsäure
- E 401: - Natriumalginat
- E 402: - Kaliumalginat
- E 403: - Ammoniumalginat
- E 404: - Calciumalginat
- E 405: - Propylenglycolalginat
- E 406: - Agar Agar
- E 407: - Carrgeen, Furcelleran
- E 407: - Johannisbrotkernmehl
- E 412: - Guarkernmehl
- E 413: - Traganth
- E 414: - Gummi arabicum
- E 415: - Xanthan
- E 416: - Karaya (Indischer Traganth)
- E 417: - Tarakernmehl (Peruanisches Johannisbrotkernmehl)
- E 418: - Gellan
- E 440: - Pektin, Opekta
- E 440ii: - Amidiertes Pektin
- E 460: - Mikrokristalline Cellulose, Cellulosepulver
- E 461: - Methylcellulose
- E 462: - Ethylcellulose
- E 463: - Hydroxypropylcellulose
- E 465: - Methylethylcellulose
- E 466: - Carboxymethylcellulose, Natriumcarboxymethylcellulose

### SÄUERUNGSMITTEL

Die Nahrungsmittel können Säuerungsmittel und/oder Säureregulatoren enthalten. Säuren im Sinne der Erfindung sind bevorzugt in Lebensmitteln zulässige Säuren, insbesondere die hier genannten:
- E 260: - Essigsäure
- E 270: - Milchsäure
- E 290: - Kohlendioxid
- E 296: - Apfelsäure
- E 297: - Fumarsäure
- E 330: - Citronensäure
- E 331: - Natriumcitrat
- E 332: - Kaliumcitrat
- E 333: - Calciumcitrat
- E 334: - Weinsäure
- E 335: - Natriumtartrat
- E 336: - Kaliumtartrat
- E 337: - Natrium-Kaliumtartrat
- E 338: - Phosphorsäure
- E 353: - Metaweinsäure
- E 354: - Calciumtartrat
- E 355: - Adipinsäure
- E 363: - Bernsteinsäure
- E 380: - Triammoniumcitrat
- E 513: - Schwefelsäure
- E 574: - Gluconsäure
- E 575: - Glucono-delta-Lacton

### SÄUREREGULATOREN

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170: - Calciumcarbonat
- E 260-263: - Essigsäure und Acetate
- E 270: - Milchsäure
- E 296: - Äpfelsäure
- E 297: - Fumarsäure
- E 325-327: - Lactate (Milchsäure)
- E 330-333: - Citronensäure und Citrate
- E 334-337: - Weinsäure und Tartrate
- E 339-341: - Orthophosphate
- E 350-352: - Malate (Äpfelsäure)
- E 450-452: - Di-, Tri- und Polyphosphate
- E 500-504: - Carbonate (Kohlensäure)
- E 507: - Salzsäure und ChlorideE 513-517 Schwefelsäure und Sulfate
- E 524-528: - Hydroxide
- E 529-530: - Oxide
- E 355-357: - Adipinsäure und Adipate
- E 574-578: - Gluconsäure und Gluconate

### WEITERE HILFS- UND ZUSATZSTOFFE

**Süßstoffe.** Zu den weiteren Hilfs- und Zusatzstoffen, die die Zubereitungen enthalten können, zählen beispielsweise Süßstoffe. Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

### In Betracht kommen auch

synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllochinon, Menachinon).
Die bevorzugten Vitamine sind neben der Ascorbinsäure die Gruppe der Tocopherole.

**Prebiotische Stoffe.** In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind etwa Fructooligosaccharide, Inuline, Isomaltooligosaccharide, Lactilol, Lactosucrose, Lactulose, Pyrodextrine Sojaoligosaccharide, Transgalactooligosaccharide, Xylooligosaccharide und Beta-Glucane.

### HERSTELLVERFAHREN

### Schichtung

Bei der Schichtung wird entweder die Komponente (a) oder die Komponente (b) zuerst und anschließend die jeweils andere Komponente eingefüllt. Dieser Vorgang kann wiederholt werden.

### Strudeldosierung

Zur Erzeugung eines Strudelmusters kann die Abfüllung der Komponenten (a) und (b) erfolgen indem
(i) die beiden Komponenten (a) und (b) über separate feste Dosierungsvorrichtungen in einen Container abfüllt, der sich während des Vorgangs dreht

### GEWERBLICHE ANWENDBARKEIT

Ein weiterer Gegenstand der vorliegenden Erfindung betrifft die Verwendung der erfindungsgemäßenZubereitungen als Lebensmittel, speziell als Brotaufstrich.

### BEISPIELE

### BEISPIELE ZUR QUARKHERSTELLUNG

Die nachfolgenden Beispiele sollen den Vorteil aufzeigen, der mit der Verwendung spezieller Quarkmassen unter Einsatz ausgewählter Starterkulturen verbunden ist.

### Beispiele 1 bis 4, Vergleichsbeispiele V1 bis V5

4 kg Magermilch wurden 6 min bei 88 °C behandelt und die enthaltenen Proteine denaturiert. Die Masse wurde mit unterschiedlichen Milchsäurebakterien und Lab versetzt, bei 30 °C etwa 18 h gereift und anschließend aufgerührt. Anschließend wurde das Fermentationsprodukt in eine Zentrifuge gegeben und ca. 3,2 kg Sauermolke als flüssiger Bestandteil abgetrennt. Die zurückgebliebene Quarkmasse (ca. 800 g) wurde durch Zugabe von Sahne auf eine Trockenmasse von 18 Gew.-% und einen Proteingehalt von 12 Gew.-% eingestellt. Beispiel 4 unterscheidet sich von Beispiel 2 dadurch, dass die Grundmasse zusätzlich nach der Fermentation in einem Rotor-Stator-Mischer der Firma YTRON verrührt ("gestrecht") wurde. Anschließend wurden die Produkte von einem Panel bestehend aus 5 erfahrenen Testern geschmacklich und sensorisch auf einer Skala von 1 (= trifft nicht zu) bis 6 (= trifft voll zu) beurteilt. Die Ergebnisse sind in **Tabelle 1** zusammengefasst. Die Beispiele 1 bis 4 sind erfindungsgemäß, die Beispiele V1 bis V5 dienen zum Vergleich. Angegeben sind die Mittelwerte der Beurteilungen.

**Tabelle 1**

| Geschmackliche und sensorische Beurteilung der Quarkgrundmassen | | | | | |
|---|---|---|---|---|---|
| **Bsp.** | **Starterkultur** | **Geschmack** | **Sensorik** | | |
| | | **Bitter** | **Cremig** | **Glatt** | **Schleimig** |
| V1 | *Bifido bakterium lactis B12* | 5,5 | 3,0 | 2,0 | 5,5 |
| V2 | *Lactobazillus acidophilus* | 5,0 | 3,5 | 2,0 | 5,5 |
| V3 | *Bifido bakterium lactis B12 + Lactobazillus acidophilus (1:1)* | 5,0 | 3,0 | 2,0 | 5,5 |
| V4 | Mischung (i) | 3,0 | 2,5 | 2,0 | 4,0 |
| V5 | Mischung (i) | 4,0 | 2,0 | 2,0 | 4,0 |
| 1 | Mischung (i+ii) = 75:25 | 2,0 | 4,0 | 3,5 | 2,0 |
| 2 | Mischung (i+ii) = 50:50 | 1,5 | 4,5 | 4,0 | 1,0 |
| 3 | Mischung (i+ii) = 25:75 | 2,5 | 4,0 | 3,5 | 1,5 |
| 4 | Mischung (i+ii) = 50:50 | 1,0 | 5,5 | 4,5 | 1,0 |

Die Versuche und Vergleichsversuche zeigen deutlich, dass die Auswahl der Starterkulturen einen erheblichen Einfluss auf die geschmacklichen und sensorischen Eigenschaften der Quarkgrundmasse hat. Die Quarkgrundmasse mit den besten Eigenschaften, d.h. der geringsten Bitterkeit, der höchsten Cremigkeit, die zudem keinen schleimigen Eindruck hinterlässt wurde mit einer erfindungsgemäßen Kombination der Kulturmischungen (i) und (ii) erhalten. Durch Behandlung im Ytron-Mischer wurden die sensorischen Werte nochmals verbessert.

### Beispiele 5 bis 7, Vergleichsbeispiele V6 bis V10

Die nachfolgenden Beispiele zeigen den Einfluss, den der gezielte Eintrag von Rührenergie in die fermentierten Quarkgrundmasse auf deren physikochemisches Verhalten hat. Beurteilt wurde, wie sich die Behandlung auf die Neigung der Quarkgrundmasse auswirkt, beim Zusatz von Gemüse- und/oder Kräuterzubereitungen Wasser aufzunehmen und so im Geschmack zu verwässern. Dazu wurden erfindungsgemäße Quarkgrundmassen, die auf der Basis von unterschiedlichen Starterkulturen hergestellt worden waren, einmal vor und einmal nach der Behandlung mit einem Rotor-Stator-Mischer der Firma YTRON (20°C, 15 min, 2.500 Upm) mit jeweils 25 Gew.-% einer Marmelade aus Erdbeeren und Ananas überschichtet und sowohl der optische als auch der geschmackliche Eindruck nach Lagerung der Zubereitungen über einen Zeitraum von 5 Stunden bei 7 °C durch ein Panel aus 5 erfahrenen Testern beurteilt.

Die optische Beurteilung erfolgte an Hand einer Skala von (1) = klare Trennung zwischen Quarkmasse und Gemüsezubereitung und (4) = Quarkmasse und Gemüsezubereitung vermischt; die geschmackliche Beurteilung erfolgte analog auf einer Skala von (1) = prägnanter Gemüsegeschmack bis (4) = Geschmack wässrig. Die Ergebnisse sind in der nachfolgenden **Tabelle 2** zusammengefasst. Die Beispiele 5 bis 7 sind erfindungsgemäß, die Beispiele V6 bis V10 dienen zum Vergleich.

**Tabelle 2**

| Beurteilung der Quarkgrundmassen ohne bzw. mit Nachbehandlung mit einem Rotor-Stator-Mischer | | | | | |
|---|---|---|---|---|---|
| **Bsp.** | **Starterkultur** | **Optischer Eindruck** | | **Geschmacklicher Eindruck** | |
| | | **ohne** | **mit** | **ohne** | **mit** |
| V6 | *Bifido bakterium lactis B12* | 3,5 | 3,0 | 3,0 | 2,5 |
| V7 | *Lactobazillus acidophilus* | 3,5 | 3,0 | 3,0 | 3,0 |
| V8 | *Bifido bakterium lactis B12 + Lactobazillus acidophilus (1:1)* | 3,5 | 3,0 | 3,0 | 2,5 |
| V9 | Mischung (i) | 3,0 | 3,0 | 3,0 | 2,5 |
| V10 | Mischung (i) | 3,0 | 2,5 | 3,0 | 2,5 |
| 5 | Mischung (i+ii) = 75:25 | 2,0 | 1,0 | 2,0 | 1,0 |
| 6 | Mischung (i+ii) = 50:50 | 1,5 | 1,0 | 1,5 | 1,0 |
| 7 | Mischung (i+ii) = 25:75 | 2,0 | 1,0 | 2,0 | 1,0 |

Die Beispiele und Vergleichsbeispiele zeigen, dass durch die Nachbehandlung im Rotor-Stator-Mischer sowohl der optische als auch der geschmackliche Eindruck noch einmal durchgehend verbessert wird. Dabei führt der Einsatz der ausgewählten Kulturmischungen gegenüber dem Standardprodukt Bifidobakterium wiederum zu einem deutlich besseren Endprodukt.

### BEISPIELE ZU HERSTELLUNG DER ENDPRODUKTE

### BEISPIELE H1 bis H6

Es wurden Zubereitungen gemäß **Tabelle 3** hergestellt. Die Mischungen 1 bis 4 wurden durch einen ersten statischen Doseur für Komponente (a) und einen zweiten statischen Doseur für Komponente (b) in eine mit einer Geschwindigkeit von 30 Upm rotierende Vorlage abgefüllt. Die Mischungen 5 und 6 wurden über koaxiale Düsen in die Vorlage extrudiert, nämlich Komponente (a) durch eine Düse mit einem Durchmesser von 0,5 cm und Komponente (b) durch 5 konzentrisch um die Hauptdüse angeordnete Düsen mit einem Durchmesser von 0,3 cm.

**Tabelle 3**

| Zusammensetzung der konfektionierten Produkte | | | | | | | |
|---|---|---|---|---|---|---|---|
| **Komp.** | **Bestandteil** | **H1** | **H2** | **H3** | **H4** | **H5** | **H6** |
| A | Speisequark 15 % F.i.Tr* | 50 | 60 | 65 | 70 | 75 | 80 |
| B | Schnittlauch/Zwiebelzubereitung | 50 | - | - | - | 25 | - |
| | Radieschen/Gurkezubereitung | - | 40 | - | - | - | 20 |
| | Petersilie/Knoblauchzubereitung | - | - | 35 | - | - | - |
| | Johannisbeergelee | - | - | - | 30 | - | - |
| | Pektin | - | - | - | - | - | 0,2 |
| | Zitronensäure | 0,1 | 0,1 | 0,1 | 0,1 | 0,1 | 0,1 |

| | | | | | | | |
|---|---|---|---|---|---|---|---|
| * Fett in Trockenmasse; nach Mischung 1 aus Tabelle 1 | | | | | | | |

## Patentansprüche

1. Lebensmittelzubereitung, enthaltend
(a) einen Quark, dem keine Sahne zugesetzt worden ist, der dadurch erhältlich ist, dass man
(a1) Rohmilch einer Temperaturbehandlung unterwirft und den Rahm abtrennt, so dass eine ungesäuerte Quarkgrundmasse entsteht,
(a2) die so erhaltene Mischung einer Temperaturbehandlung unterwirft, bis Denaturierung eintritt,
(a3) das denaturierte Produkt mit Starterkulturen und Lab versetzt und gegebenenfalls
(a4) die nach Abschluss der Fermentation erhaltene Quarkgrundmasse auf einen definierten Trockenmassen- und Proteingehalt einstellt,
und als Starterkultur
(i) eine erste Mischung von fünf Mikroorganismen-Stämmen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen-Stämmen umfassend (ii-1) *Streptococcus thermophilus,* (ii-2) *Lactococcus lactis subsp. lactis* und (ii-3) *Lactococcus lactis subsp. cremoris*
einsetzt,
wobei der Quark eine Viskosität nach Brookfield (RVT, Spindel 1, 10 Upm) bei 20 °C im Bereich von 1.000 bis 8.000 mPas aufweist,
und
(b) eine Gemüse- oder Kräuterzubereitung,
wobei die Komponenten (a) und (b) im Gewichtsverhältnis von 80:20 bis 50:50 vorliegen, und in einem Container dergestalt nebeneinander vorliegen, dass sie in den drei Raumrichtungen zusammenhängende Volumina einnehmen, die sich nicht vermischen.

2. Zubereitung nach Anspruch 1, **dadurch gekennzeichnet, dass** die Komponenten (a) und (b) geschichtet vorliegen.

3. Zubereitung nach Anspruch 1, **dadurch gekennzeichnet, dass** die Komponenten (a) und (b) im Container ein Strudelmuster bilden.

4. Zubereitung nach Anspruch 1, **dadurch gekennzeichnet, dass** die Komponenten (a) und (b) im Container als jeweils separate Stränge vorliegen.

5. Zubereitung nach mindestens einem der Ansprüche 1 bis 4, **dadurch gekennzeichnet, dass** sie als Komponente (b) eine Zubereitung von Gemüse oder Kräutern enthalten, die ausgewählt sind aus der Gruppe die gebildet wird von Zwiebeln, Schnittlauch, Gurke, Radieschen, Knoblauch, Rosmarin, Thymian, Salbei, Petersilie und deren Gemischen.

6. Zubereitung nach mindestens einem der Ansprüche 1 bis 5, **dadurch gekennzeichnet, dass** sie weiterhin Verdickungsmittel enthält.

7. Zubereitung nach mindestens einem der Ansprüche 1 bis 6, **dadurch gekennzeichnet, dass** sie weiterhin Säuerungsmittel und/oder Säureregulatoren enthält.

8. Zubereitung nach mindestens einem der Ansprüche 1 bis 7, **dadurch gekennzeichnet, dass** sie
(a) 20 bis 80 Gew.-% Quark, dem keine Sahne zugesetzt worden ist,
(b) 20 bis 50 Gew.-% Gemüse- und/oder Kräuterzubereitung,
(c) 0 bis 5 Gew.-% Verdickungsmittel,
(d) 0 bis 2 Gew.-% Säuerungsmittel und
(e) 0 bis etwa 3 Gew.-% weitere Hilfs- und Zusatzstoffe
mit der Maßgabe enthalten, dass sich die Mengenangaben zu 100 Gew.-% ergänzen.

9. Verfahren zur Herstellung einer Lebensmittelzubereitung nach mindestens einem der Ansprüche 1 bis 8 **dadurch gekennzeichnet, dass** man die beiden Komponenten (a) und (b) über separate feste Dosierungsvorrichtungen in einen Container abfüllt, der sich während des Vorgangs dreht.

10. Verwendung einer Zubereitung nach mindestens einem der Ansprüche 1 bis 8 als Lebensmittel.

11. Verwendung nach Anspruch 10, **dadurch gekennzeichnet, dass** die Zubereitung als Brotaufstrich eingesetzt wird.

## Claims

1. A foodstuffs preparation comprising
(a) a quark, which has not yet had any cream added to it, wherein said quark is obtained by a process comprising the following steps:
(a1) subjecting the raw milk to heat treatment and removing the cream to obtain an un-acidified quark base mix,
(a2) subjecting the thus obtained mixture to heat treatment until onset of denaturation,
(a3) admixing the denatured product with starter cultures and rennet and optionally
(a4) adjusting the quark base mix obtained after completion of fermentation to a defined dry matter content and protein content,
where the starter cultures employed are
(i) a first mixture of five microorganism strains comprising (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* and (i-5) *Lactococcus lactis subsp. cremoris* and
(ii) a second mixture of three microorganism strains comprising (ii-1) *Streptococcus thermophilus,* (ii-2) *Lactococcus lactis subsp. lactis* and (ii-3) *Lactococcus lactis subsp. Cremoris*
wherein the quark has a Brookfield viscosity (RVT, spindle 1, 10 RPM) at 20 °C. in the range from 1000 to 8000 mPas,
(b) a vegetable or herb preparation,
wherein the components (a) and (b) are comprised in a weight ratio of about 80:20 to about 50:50 and present side by side in a container such that they occupy three-dimensionally continuous volumes that do not mix.

2. Preparation according to claim 1, wherein the components (a) and (b) are layered.

3. Preparation according to claim 1, wherein the components (a) and (b) form a swirl pattern in the container.

4. Preparation according to claim 1, wherein the components (a) and (b) are present in the container as respective separate strands.

5. Preparation according to at least one of claims 1 to 4, comprising as component (b) a preparation of vegetables or herbs selected from the group of onion, chive, cucumber, radish, garlic, rosemary, thyme, sage, parsley and mixtures thereof.

6. Preparation according to at least one of claims 1 to 5, further comprising thickeners.

7. Preparation according to at least one of claims 1 to 6, further comprising acidulants and/or acidity regulators.

8. The preparation according to at least one of claims 1 to 7, comprising
(a) 20 to 80 wt % of quark, which has not yet had any cream added to it,
(b) 20 to 50 wt % of vegetable and/or herb preparation,
(c) 0 to 5 wt % of thickeners,
(d) 0 to 2 wt % of acidulants and
(e) 0 to about 3 wt % of further auxiliary/added substances,
with the proviso that the specified amounts sum to 100 wt %.

9. A process for producing a foodstuffs preparation according to at least one of claims 1 to 8, **characterized in that** the two components (a) and (b) are filled via separate fixed dispensing apparatuses into a container which rotates during the procedure.

10. Use of a preparation according to at least one of claims 1 to 8 as a food.

11. Use according to claim 10 **characterized in that** the preparation is used as a spread.

## Revendications

1. Préparation alimentaire, contenant:
(a) une caillebotte, à laquelle de la crème n'a pas été ajoutée, qui peut être obtenue en ce que
(a1) du lait brut est soumis à un traitement thermique et la crème est séparée, de manière à former une masse de base de caillebotte non acidifiée,
(a2) le mélange ainsi obtenu est soumis à un traitement thermique jusqu'à ce qu'une dénaturation se produise,
(a3) le produit dénaturé est mélangé avec des cultures de départ et de la présure, et éventuellement
(a4) la masse de base de caillebotte obtenue après la fin de la fermentation est ajustée à une teneur en matière sèche et en protéines définie,
et en tant que culture de départ,
(i) un premier mélange de cinq souches de microorganismes comprenant (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* et (i-5) *Lactococcus lactis subsp. cremoris,* et
(ii) un deuxième mélange de trois souches de microorganismes comprenant (ii-1) *Streptococcus thermophilus,* (ii-2) *Lactococcus lactis subsp. lactis* et (ii-3) *Lactococcus lactis subsp. cremoris,*
sont utilisés,
la caillebotte présentant une viscosité selon Brookfield (RVT, fuseau 1, 10 tours/min) à 20 °C dans la plage allant de 1000 à 8 000 mPas,
et
(b) une préparation à base de légumes ou d'herbes,
les composants (a) et (b) étant présents en un rapport en poids de 80:20 à 50:50, et se présentant dans un contenant l'un à côté de l'autre de sorte qu'ils occupent des volumes connexes dans les trois directions de l'espace, qui ne se mélangent pas.

2. Préparation selon la revendication 1, **caractérisée en ce que** les composants (a) et (b) se présentent sous forme stratifiée.

3. Préparation selon la revendication 1, **caractérisée en ce que** les composants (a) et (b) forment dans le contenant un motif de tourbillon.

4. Préparation selon la revendication 1, **caractérisée en ce que** les composants (a) et (b) se présentent dans le contenant sous la forme de cordons séparés.

5. Préparation selon au moins l'une quelconque des revendications 1 à 4, **caractérisée en ce qu'**elle contient en tant que composant (b) une préparation à base de légumes ou d'herbes, qui sont choisis dans le groupe formé par les oignons, la ciboulette, le concombre, les radis, l'ail, le romarin, le thym, la sauge, le persil et leurs mélanges.

6. Préparation selon au moins l'une quelconque des revendications 1 à 5, **caractérisée en ce qu'**elle contient en outre des épaississants.

7. Préparation selon au moins l'une quelconque des revendications 1 à 6, **caractérisée en ce qu'**elle contient en outre des acidifiants et/ou des régulateurs d'acidité.

8. Préparation selon au moins l'une quelconque des revendications 1 à 7, **caractérisée en ce qu'**elle contient :
(a) 20 à 80 % en poids de caillebotte à laquelle de la crème n'a pas été ajoutée,
(b) 20 à 50 % en poids de préparation à base de légumes et/ou d'herbes,
(c) 0 à 5 % en poids d'épaississants,
(d) 0 à 2 % en poids d'acidifiants et
(e) 0 à environ 3 % en poids d'autres adjuvants et additifs,
à condition que la somme des données de quantité soit de 100 % en poids.

9. Procédé de fabrication d'une préparation alimentaire selon au moins l'une quelconque des revendications 1 à 8, **caractérisé en ce que** les deux composants (a) et (b) sont placés par des dispositifs d'alimentation fixes séparés dans un contenant, qui est mis en rotation pendant le processus.

10. Utilisation d'une préparation selon au moins l'une quelconque des revendications 1 à 8 en tant que produit alimentaire.

11. Utilisation selon la revendication 10, **caractérisée en ce que** la préparation est utilisée en tant que pâte à tartiner.
